# EUROPEAN PATENT APPLICATION

(11) **EP 4 484 153 A1**
(43) Date of publication of application: **01.01.2025**
(21) Application number: 23472003.5
(22) Date of filing: 29.06.2023
(51) Int. Cl.: B32B 5/02, B32B 5/26, E04C 2/16, B27N 1/02, B27N 3/02, C08L 97/02

(54) **ECO-FRIENDLY THREE-LAYER HEMP PANEL INCLUDING AN ADHESIVE COMPOSITION OF SYNTHETIC AND NATURAL BINDING SUBSTANCES AND METHOD FOR ITS PRODUCTION**

(71) Applicant: Stantchev, Rozalin Ivanov, Sofia (BG)
(72) Inventor: Stantchev, Rozalin Ivanov, Sofia (BG)

(57) **Abstract**

Three-layer panel of hemp hurd (awn) (particles and short fibres), formed into two face layers and interposed between them an intermediate layer containing hemp particles and short fibers from hemp stems, and comprising a dispersed phase and a matrix phase, wherein the dispersed phase comprises hemp particles (70-95 % by weight of the total dispersed phase) and short fibers from hemp stems (5-30 % by weight of the total dispersion phase), and the matrix phase comprises as binders an adhesive phase comprising one or more of urea formaldehyde resin, with a molar ratio in the range 1,0 to 1,2; melamine formaldehyde resin, with molar ratio 1,1 to 1,6; lignosulfonate (sulfite lignin) or polymethylene diphenyl diisocyanate; and one or more enhancers selected from the group of ammonium hydrogen sulfite, paraffin, and amino polyphosphate. The invention also relates to a method for the production of the panel according to the description which includes pre-pressing (cold pressing) of the carpet and hot pressing.

The invention provides an ecological panel of hemp, with which a reduction in the consumption (respectively felling) of wood raw material is achieved due to the use of residual agricultural lignocellulosic material - hemp stems. In addition, the invention ensures the use of a secondary product from the production of the pulp and paper industry - lignosulfonate (sulfite lignin).

## Description

### TECHNICAL FIELD

The present invention relates to the field of processing hemp particles and short fibers from hemp stems for the purpose of industrial hemp application in construction industry. In particular, the invention relates to a hemp hurd (awn) panel and a method for its production.

### PRIOR ART

Hemp, as a building material, is heat-insulating, fire-resistant and environmentally friendly. As a result, hemp fiber used as a building element can significantly reduce CO₂ emissions in the construction sector.

Hemp also behaves very well in relation to moisture. As an insulating material, it absorbs water from the air and thus regulates the humidity inside the premises. This property has a positive effect on the inhabitants and prevents the appearance of mold. In buildings insulated with hemp, the appearance of mold is extremely rare. This natural insulation is associated with higher investment costs, but they are repaid due to the large energy savings - about 70 %.
BG 4395 U1 descloses a slab of hemp hurd (awn) for the utilization of agricultural waste from hemp particles and short fibers in order to provide a substitute for traditionally used wood materials. In particular, the hemp hurd (awn) is indicated that contains a binder in an amount relative to dry mass in the range of 8% to 14% depending on the strength and purpose of the slab. The adhesive composition of the slab consists of 90% urea formaldehyde resin (CFC) and 10% melamine formaldehyde resin (MFR). As a water-repellent substance, a paraffin emulsion was used, in which the paraffin content relative to the absolutely dry particles was 0.5%, and the emulsion was introduced at a concentration of 50%.

Thus, the object of the present invention is to provide an eco-friendly panel, comprising a hemp hurd (awn) with improved ecological and other relevant performance parameters for the sector of the application. It is also important for the invention to achieve an economic effect with the technical solution of the object of the present application.

### DATAILED DESCRIPTION

The present invention relates to a three-layer panel of hemp hurd (awn), in which two face and one intermediate layer are provided. The intermediate layer constitutes according to the present invention from 50 to 70% of the total thickness of the three-layer panel, and the face layers constitute from 30 to 50% of the total thickness of the three-layer panel.

Generally, the three-layer hemp hurd (awn) panel according to the invention comprises hemp hurd (awn), representing a dispersed phase which is composed of
1) hemp particles - 70÷95% of the total dispersed phase;
2) short fibers from hemp stems - 5÷30% of the total dispersed phase.

Moreover, the three-layer hemp panel according to the invention includes two face layers of hemp hurd (awn) and an intermediate layer of hemp hurd (awn) located between them, wherein:
3) the sizes of the particles of the face layer are preferably - length from 10 to 15 mm; width from 2 to 8 mm; thickness from 0.1 to 0.5 mm;
4) the sizes of the particles for the intermediate layer are preferable - length from 20 to 40 mm; width from 2 to 5 mm; thickness from 0.3 to 0.8 mm.

Additionally, the three-layer hemp hurd (awn) panel according to the invention also includes a matrix phase, which is made up of binders (synthetic and natural) in an amount of 4 to 20% relative to the total mass of the absolutely dry hemp particles and short fibers..

It is very essential for the three-layer hemp hurd (awn) panel according to the invention that it contains hemp particles and short fibers from hemp stems and that it consists of a dispersed and matrix phase, where the dispersed phase includes hemp particles - 70÷95 wt. % of the total dispersed phase and short fibers from hemp stems - 5÷30 wt.% of the total dispersed phase, and the matrix phase includes an adhesive phase including one or more of urea formaldehyde resin (CFC), with a molar ratio of 1.0 to 1, 2; melamine formaldehyde resin (MFS), with a molar ratio of 1.1 to 1.6; lignosulfonate (sulfite lignin) or polymethylene diphenyl diisocyanate; and one or more enhancers selected from ammonium hydrogen sulfite, paraffin, and amino polyphosphate.

In a preferred embodiment of the three-layer panel according to the invention, the urea-formaldehyde resin, with a molar ratio of 1.0 to 1.2 in an amount of 70÷90% by weight of the adhesive phase. To the urea formaldehyde resin is added from 1 to 3% relative to the dry resin, ammonium sulfate. Ammonium sulfate acts as a catalyst for the polymerization process, through polycondensation of the resin.

In one preferred embodiment of the three-layer hemp hurd (awn) panel according to the invention, the melamine formaldehyde resin, with a molar ratio of 1.1 to 1.6, is present in an amount of 10÷20 wt.% of the adhesive phase;

In another preferred embodiment of the three-layer hemp hurd (awn) panel, according to the invention, the lignosulfonate (sulfite lignin) is added in an amount of 10÷30 wt. % of adhesive phase.

In another preferred embodiment of the three-layer hemp hurd (awn) panel according to the invention, polymethylene diphenyl diisocyanate is present in an amount of 10÷20 wt. % of the adhesive phase.

In a further preferred embodiment of the three-layer hemp hurd (awn) panel according to the invention, ammonium hydrogen sulphite as a scavenger for free formaldehyde is present in an amount of 1÷3 wt. % relative to absolutely dry synthetic resins (urea formaldehyde and melamine formaldehyde resins).

In a further preferred embodiment of the three-layer hemp hurd (awn) panel according to the invention, the paraffin as a water-repellent additive is present in an amount of 0.5÷1.0 wt.% relative to the absolutely dry hemp particles and fibers. The paraffin is introduced in the form of an emulsion with a concentration preferably of 50%.

In a further preferred embodiment of the three-layer hemp hurd (awn) panel according to the invention, the amino-polyphosphate as a flame retardant is present in an amount of 15÷20 wt. % of matrix phase

The present invention also provides a method for the production of a three-layer hemp hurd (awn) panel as defined above, which comprises the following steps of:
1) Hemp stems are prepared, using guillotine scissors, into 10÷50 mm long cuts;
2) The resulting cuttings are crushed into particles (with short fibers included in their composition) by means of rotor-centrifugal mills;
3) The particles from stage 2) are separated into groups for the face and intermediate layer, respectively, by means of flat sieve sorting machines;
4) In case of insufficient quantity of particles for the face layers, or in case of the presence of very large particles, a secondary crushing is provided by means of counter-selector mills; Secondary crushed particles are returned for re-sorting;
5) Drying of the particles to a humidity of 1 to 5%, by means of belt dryers;
6) Bonding by gluing of the particles for the face layers of the panel, by means of mixers with continuous action;
7) Bonding by gluing of the particles for the intermediate layer of the panel, by means of mixers with continuous action
   Bonding by glueing of the particles for the face layers of the panel, by means of mixers with continuous action;
8) Forming a hemp hurd (awn) carpet using a bulking machine with 3 to 4 bulking heads - 2 bulking heads for the bottom and top face layer of the panel, respectively; and from 1 to 2 pouring heads for the intermediate layer of the panel;
9) Pre-pressing (cold pressing) of the carpet, using a belt press with a maximum specific pressure of up to 4.0 MPa
10) Format cutting of the carpet using circular saws;
11) Hot pressing by using multi-stage presses with tact action; temperature of the press plates from 140 to 200° C, pressing duration from 15 s/mm to 60 s/mm; three-stage hot pressing mode - first stage at pressure up to 6 MPa and duration up to 30% of the entire cycle; second stage at pressure up to 2 MPa and duration up to 30% of the entire cycle; third stage at pressure up to 0.8 MPa and duration up to 40% of the entire cycle;
12) Acclimatization of the panel, using racks (suns) with a circular cross-section, forming the layers by means of discontinuous supports driven clockwise or counter-clockwise;
13) Second level of acclimatization by forming figures with plates in buffer storage;
14) Calibrating the thickness and reducing the roughness of the panel using wide belt double-sided grinding machines;
15) Format cutting of the panels, using circular machines;
16) Surface refinement of the panel, including one of the following operations: lamination, veneering, varnishing, priming and painting, casing, perforation, flatting;
17) Packaging and storage of finished products.

### Examples

In the following example, the production of a three-layer panel, according to the invention is presented, where the components are in a specific weight ratio/quantity:
Three-layer hemp hurd (awn) panel with a density of 650 kg.m⁻³ and a thickness of 16 mm were obtained. The ratio of the intermediate to the face layers of the panel is 65% to 35%. The dispersed phase of the panel is composed of up of 94% hemp particles and 6% short fibers. The hemp hurd (awn) has an initial moisture content of 6%.

The total content of binders is 12% of the absolutely dry lignocellulosic mass (hemp particles and short fibers). The matrix phase is composed of: 70 wt. % urea-formaldehyde resin with a molar ratio of 1.0; 15 wt.% melamine formaldehyde resin with a molar ratio of 1.5; 10 wt% ammonium lignosulfonate; and 5 wt. % polymethylene diphenyl diisocyanate (pMDI). To the urea formaldehyde resin was added 1.5 wt. % (relative to the absolutely dry resin) ammonium sulfate. Ammonium hydrogen sulphite was used as a formaldehyde scavenger in an amount of 2 wt. % relative to absolutely dry synthetic resins (urea formaldehyde and melamine formaldehyde resins). As a water-repellent substance, paraffin was used in a content of 0.8 wt. % relative to the absolutely dry lignocellulosic mass. Binders and water repellants are introduced into the lignocellulosic mass (hemp particles and short fibers) in the form of solutions/suspensions with a concentration of 50%. Total time to apply and mix the enhancers and hemp awn is 2 minutes and 40 seconds

The hot pressing was carried out at a temperature of the press plates of 170° C and at a pressing factor of 30 s.mm⁻¹. The hot pressing mode used is three-stage as follows:
I stage - pressure 3.0 MPa and duration 20% of the entire cycle;
II stage - pressure 1.4 MPa and duration 20% of the entire cycle;
III stage - pressure 0.6 MPa and duration 40% of the entire cycle.

The obtained results establish the following surprisingly high performance indicators for the three-layer hemp hurd (awn) panels according to the invention:
Water absorption for 24 hours -52,6 %;
Swelling in thickness within 24 hours - 14,1 %;
Flexural strength - 18,4 N.mm⁻²;
Modulus of elasticity in bending -2520 N.mm⁻²;
Transverse Tensile Strength -0,91 N.mm⁻²;
Screw retention perpendicular to the wide side of the panel - 92,7 N.mm⁻¹;
Screw retention perpendicular to the panel edge -62,3 N.mm⁻¹;
Free formaldehyde content - up to 1,1 mg/100 g absolutely dry substance (ecological panels in emission class Super E₀/ 0,5 CARB 2).

Advantages of eco-friendly three-layer hemp hurd (awn) panels and method of their preparation:
The present invention provides the eco-friendly three-layer panels of hemp hurd (awn) and a method for production, which lead to a reduction in the consumption (respectively, felling) of wood raw material at the expense of using residual agricultural lignocellulosic material - hemp stems. In addition, the invention ensures the use of a secondary product from the production of the pulp and paper industry - lignosulfonate (sulfite lignin). Due to the lower moisture content of the hemp stalks compared to the wood raw material, it is suggested to use a belt dryer for drying, rather than the energy-intensive drum dryers. This whole complex of factors leads to a reduction in the carbon impact of production due to the use of ready for use finished product - lignosulfonate and a reduction in energy costs during drying. The consumption of drying agent is also reduced.

From the consumer's point of view, the offered three-layer panels made of hemp hurd (awn), according to the current invention represent an ecological product with formaldehyde emissions of the Super E0 class, that is, formaldehyde emissions comparable to those of natural wood.

## Claims

1. A three-layer panel of hemp hurd (awn), formed in two face layers and placed between them an intermediate layer containing hemp particles and short fibers from hemp stems and including a dispersed phase and a matrix phase, **characterized in that** the dispersed phase includes hemp particles - 70÷ 95 wt. % of the total dispersed phase and short fibers from hemp stems - 5÷30 wt.% of the total dispersed phase, and the matrix phase includes as binders an adhesive phase including one or more of urea formaldehyde resin, with a molar ratio of 1.0 to 1, 2; melamine formaldehyde resin, with a molar ratio of 1.1 to 1.6; lignosulfonate (sulfite lignin) or polymethylene diphenyl diisocyanate; and one or more enhancers selected from ammonium hydrogen sulfite, paraffin, and amino polyphosphate.

2. Three-layer panel, according to claim 1, **characterized in that** the hemp particles and short fibers from hemp stems of the face layers have a particle size of 10 to 15 mm in length; width from 2 to 8 mm; thickness from 0.1 to 0.5 mm.

3. Three-layer panel according to the any of the preceding claims, **characterized in that** the hemp particles and short fibers from hemp stems of the intermediate layer have a particle size of 20 to 40 mm in length; width from 2 to 5 mm; thickness from 0.3 to 0.8 mm.

4. Three-layer panel according to claim 1, **characterized in that** the urea-formaldehyde resin, with a molar ratio of 1.0 to 1.2, is in an amount of 70÷90% by weight of the adhesive phase.

5. Three-layer panel according to the any of the preceding claims, **characterized in that** the melamine formaldehyde resin, with a molar ratio of 1.1 to 1.6, is in an amount of 10-20% by weight of the adhesive phase.

6. Three-layer plate according to any of the preceding claims, **characterized in that** the lignosulfonate (sulfite lignin) is in an amount of 10÷30 wt. % of the adhesive phase.

7. Three-layer panel according to any of the preceding claims, **characterized in that** the polymethylene diphenyl diisocyanate is in an amount of 10÷20 wt. % of the adhesive phase.

8. Three-layer panel according to any of the the preceding claims, **characterized in that** ammonium hydrogen sulphite as a scavenger for free formaldehyde is present in an amount of 1÷3 wt. % relative to absolutely dry synthetic resins: urea-formaldehyde and melamine-formaldehyde resins.

9. Three-layer panel according to any of the preceding claims, **characterized in that** the paraffin as a water-repellent additive is in an amount of 0.5÷1.0 wt.% of the absolutely dry mass of hemp particles and short fibers.

10. Three-layer panel according to any of the preceding claims, **characterized in that** the amino-polyphosphate as a flame retardant is present in an amount of 15 ÷ 20 wt. % of the matrix phase.

11. Three-layer panel according to any the preceding claims, **characterized in that** the ratio of the intermediate layer to the face layers is 65% to 35%, the dispersed phase contains 94% hemp particles and 6% short fibers, the total binder content is 12% of the absolute dry mass of hemp particles and short fibers, wherein the matrix phase is composed of: 70 wt. % urea-formaldehyde resin with a molar ratio of 1.0; 15 wt.% melamine formaldehyde resin with a molar ratio of 1.5; 10 wt% ammonium lignosulfonate; and 5 wt. % polymethylene diphenyl diisocyanate, with 1.5 wt. % relative to the absolutely dry resin, ammonium sulfate, wherein ammonium hydrogen sulfite is present as a formaldehyde scavenger in an amount of 2 wt. % relative to the absolutely dry urea-formaldehyde and melamine-formaldehyde resins, as a water-repellent substance, paraffin is present in an amount of 0.8 wt. % relative to the absolutely dry mass of hemp particles and short fibers.

12. Method for producing a three-layer hemp panel according to claims 1-11 comprising the steps of:
• obtaining cuttings from hemp stems with a length of 10÷50 mm by means of guillotine scissors and shredding the obtained cuttings by means of rotary-centrifugal mills
• separation of the material from the first stage into a part for the face and a part for the intermediate layer by means of flat sieve sorting machines;
• drying of the particles to a humidity of 1 to 5%, by means of belt dryers;
• bonding by gluing of the particles of the face layers and intermediate layer of the panel, by means of mixers with continuous action;
• forming a hemp hurd (awn) carpet using a bulking machine with 3 to 4 bulking heads - 2 bulking heads for the bottom and top face layer of the panel, respectively; and from 1 to 2 pouring heads for the intermediate layer of the panel
• acclimatization of the panel, using racks (suns) with a circular cross-section, forming the layers by means of discontinuous supports driven clockwise or counter-clockwise;
• second level of acclimatization by forming figures with plates in buffer storage;
• calibrating the thickness and reducing the roughness of the panel using wide belt double-sided grinding machines;
• format cutting of the panels, using circular machines
• surface refinement of the panel, including one of the following operations: lamination, veneering, varnishing, priming and painting, casing, perforation, flatting;
• packaging and storage of finished products
**characterized in that** in-between the stage of carpet formation and the stage of format cutting, is performed a stage of:
• pre-pressing (cold pressing) of the carpet, using a belt press with a maximum specific pressure of up to 4.0 MPa,
and after the format cutting stage conductes a stage of:
• hot pressing by using multi-stage presses with tact action; temperature of the press plates from 140 to 200° C, pressing duration from 15 s/mm to 60 s/mm; three-stage hot pressing mode - first stage at pressure up to 6 MPa and duration up to 30% of the entire cycle; second stage at pressure up to 2 MPa and duration up to 30% of the entire cycle; third stage at pressure up to 0.8 MPa and duration up to 40% of the entire cycle.

13. Method for the production of a three-layer plate according to the preceding claim, **characterized in that** after the stage of separating the material from the first stage into one part for the face layers and one part for the intermediate layer by means of flat sieve sorting machines, a stage of secondary crushing is carried out by means of counter-selector mills wherein the secondary crushing particles are returned for re-sorting.
